# EUROPEAN PATENT APPLICATION

(11) **EP 2 348 082 A1**
(43) Date of publication of application: **27.07.2011**
(21) Application number: 11151323.0
(22) Date of filing: 18.01.2011
(51) Int. Cl.: C09J 5/00

(54) **Deaeration-adherable sheet**

(30) Priority: 21.01.2010 JP 2010010845
(71) Applicant: Meiwa Gravure Co.Ltd., Higashiosaka city Osaka 577-8510 (JP)
(72) Inventor: Norihiro, Oshima, Higashiosaka city Osaka 577-8510 (JP); Yuji, Okada, Higashiosaka city Osaka 577-8510 (JP); Satoshi, Matsui, Higashiosaka city Osaka 577-8510 (JP)
(74) Representative: Calderbank, Thomas Roger

(57) **Abstract**

The present invention intends to provide a sheet where after the sheet is peeled off, no adhesive remains on a surface where the sheet is stuck before, and air is not trapped at the time of sticking. A sheet (1) can be deaerated to adhere to an object without using an adhesive, wherein an aeration groove (3) is provided at least in a deaeration-adhesion surface (2) of the sheet. The aeration groove (3) is formed by embossing. A groove depth (30) of the aeration groove (3) is 30 to 100 µm, and a groove width (31) of the aeration groove (3) is 50 to 120 µm.

## Description

### Technical Field

The present invention relates to a deaeration-adherable sheet. The deaeration-adherable sheet is, for example, a cling sheet.

### Background Art

A conventional opaque sheet, which is stuck on car windows, building windows, wall surface or the like to block light, prevent shattering of glass when glass is broken, block ultraviolet rays, improve design or the like, includes a flat pressure-sensitive adhesive sheet body and a flat release film provided on the pressure-sensitive adhesive surface of the pressure-sensitive adhesive sheet body. When in use, the release film is peeled off and the pressure-sensitive adhesive sheet body is stuck on a surface where the sheet is to be attached.
With a pressure-sensitive adhesive sheet, if air enters the sheet (air is trapped) when a user sticks the sheet to the surface, blister-like air entrapments in various forms are generated in the surface of the stuck sheet.
Air in the air entrapment is removed by using a spatula or the like. However, it is difficult to remove that air. To solve the problem, JPA2002-327157 discloses "a film using a pressure-sensitive adhesive" where air is easily removed.

A sheet using a pressure-sensitive adhesive or an adhesive as disclosed in JPA2002-327157, however, has a problem that after the sheet is peeled off, the adhesive remains on the surface to which the sheet has been attached. A sheet using an adhesive also has problems that the adhesive sticks to the hands of a user, surfaces where the adhesive is applied stick to each other, and once peeled off, the sheet cannot be reused since the adhesive force of the adhesive is reduced.

To solve the problems, JPA H11-059094 discloses a sheet for effecting deaeration adhesion by processing the surface of a sheet which is to adhesive to an object (hereinafter the "sticking surface").
The examples of deaeration adhesion is to maintain a state in which a sheet is prevented from being peeled off by applying mirror finishing to the sticking surface of the sheet and thereby preventing air from entering a space between a surface to which the sheet is stuck and the mirror-finished surface by use of the smoothness of the mirror-finished surface.

From the above circumstances, "the deaeration-adherable sheet" can be stuck on "the surface of an object without using an adhesive", and after the sheet is peeled off, no adhesive remains on the surface to which the sheet has previously been stuck. The sheet, however, is considered not to be able to solve the problem that "if air enters the sheet (air is trapped) when a user sticks the sheet, blister-like air entrapment in various forms is generated in the surface of the stuck sheet", and "air in the air entrapment is removed by using a spatula or the like, however, it is difficult to remove air therefrom".
It is a preferred aim of the present invention to provide a deaeration-adherable sheet where after the sheet is peeled off, no adhesive remains on a surface to which the sheet has previously been stuck, and blister-like air entrapment is not generated at the sticking surface of the sheet to thereby provide excellent appearance.

### Disclosure of the invention

### (Finding of the present invention)

The present invention is based on a finding that a deaeration-adherable sheet can be stuck even when an aeration groove is provided in the stick surface of the sheet obtained by testing a configuration normally considered impossible by those skilled in the art that an aeration groove is provided in the sticking surface of a deaeration-adherable sheet which is not peeled off by preventing air from entering the sheet.

A deaeration-adherable sheet is a sheet (1) that can be deaerated to adhere to an object without using an adhesive,
wherein an aeration groove (3) is provided at least in a deaeration-adhesion surface (2) of the deaeration-adherable sheet.

In the deaeration-adherable sheet, the aeration groove (3) may be provided by concave-convex processing.

In the deaeration-adherable sheet, a groove depth (30) of the aeration groove (3) may be 30 µm to 100 µm.

In the deaeration-adherable sheet, the width (31) of the aeration groove (3) may be 50 µm to 120 µm.

In the deaeration-adherable sheet, the aeration groove (3) may have the shape of a regular polygon shape.

The deaeration-adherable sheet (1) may be made of poly(vinyl chloride).

By constructing a sheet based on the above finding, a deaeration-adherable sheet where air does not enter the sheet and after the sheet is peeled off, no adhesive remains on a surface to which the sheet has previously been stuck before can be obtained.
Based on the above advantages, the deaeration-adherable sheet can be easily stuck again, and no blister-like air entrapment is generated in the surface thereof, thereby to provide excellent appearance.

### Brief Description of the Drawings

FIG. 1 is an entire view and a partially enlarged view of a deaeration-adherable sheet;
FIG. 2 is a partially enlarged sectional view of a deaeration-adherable sheet according to a first embodiment; and
FIG. 3 is a partially enlarged sectional view of a deaeration-adherable sheet according to a second embodiment.

### Description of Symbols

1 Deaeration-adherable sheet
10 Flexible member
11 Flexible member surface
12 Surface sheet
2 Deaeration-adhesion surface
3 Aeration groove
30 Groove depth
31 Groove width
4 Adhesion portion

### Best Mode for Carrying Out the Invention

In the following, preferred embodiments of a deaeration-adherable sheet according to the present invention will be described in detail. The deaeration-adherable sheet is applied to light-shielding sheets, light-transmissive sheets, reflection sheets, frosted glass sheets or the like.

### (First Embodiment)

A deaeration-adherable sheet 1 according to a first embodiment has flexibility.

### (Basic application of the deaeration-adherable sheet 1)

The deaeration-adherable sheet 1 is used to block light, block view, suppress shattering of glass when glass is broken, block ultraviolet rays, improve design or the like.

### (Basic configuration of the deaeration-adherable sheet 1)

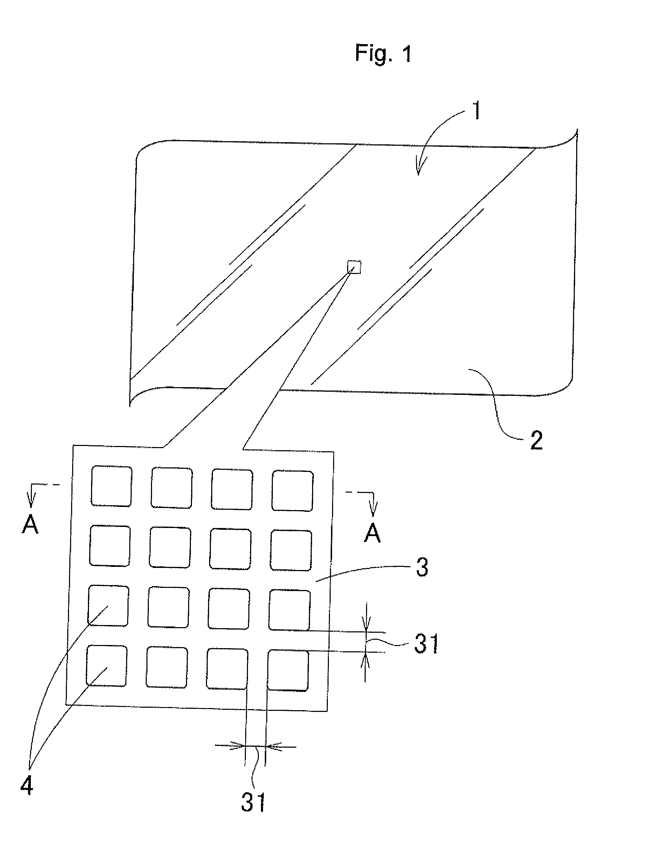

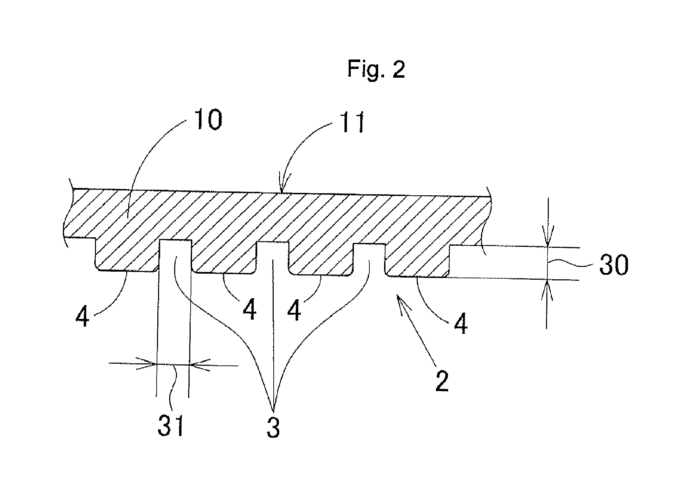

FIG. 1 shows the whole of, and a partially enlarged view of, a deaeration-adherable sheet. A section along the line A-A in FIG. 1 is shown in FIG. 2. That is, FIG. 2 is a partially enlarged sectional view of the deaeration-adherable sheet according to the first embodiment.
The deaeration-adherable sheet 1 includes a flexible member 10, a flexible member surface 11, and a deaeration-adhesion surface 2 (a sticking surface) as shown in FIGS. 1 and 2.
The flexible member 10 of the deaeration-adherable sheet 1 may be made of thermoplastics such as poly(vinyl chloride) and polyolefin.
The deaeration-adherable sheet 1 preferably has a thickness of 150 to 300 µm.

### (Flexible member surface 11)

Pattern drawing, concave-convex processing, surface modification or the like may be performed on the flexible member surface 11. Examples of concave-convex processing include embossing.
Another layer may be laminated on the flexible member surface 11, to allow the deaeration-adherable sheet 1 to be a multilayered sheet having flexibility.

### (Deaeration-adhesion surface 2)

The deaeration-adhesion surface 2 is smooth to effect deaeration adhesion. To ensure the deaeration-adhesion surface 2 is smooth, mirror finishing may be employed, for example.
An adhesion portion 4 (a remaining smooth surface) is formed in the deaeration-adhesion surface 2, by providing an aeration groove 3 in the smooth surface as shown in the partially enlarged view of FIG. 1.
To form the aeration groove 3 and the adhesion portion 4, a method of involving depressing the aeration groove 3 by pressing a mold, or a method of involving raising the adhesion portion 4 may be employed.
Examples of the above methods include embossing and extrusion molding. The two types of the methods can both depress and raise the surface.

### (Aeration groove 3 and adhesion portion 4)

In the aeration groove 3 and the adhesion portion 4 provided as described above, a groove depth 30 of the aeration groove 3 (the height of the adhesion portion 4) and a groove width 31 of the aeration groove 3 (a gap between the adhesion portions 4) are set as shown in Fig. 2.
The groove depth 30 is preferably 30 to 100 µm.
Preferably, (the groove depth 30÷the thickness of the deaeration-adherable sheet 1) x 100 = 10 to 50(%).
The groove width 31 is preferably 50 to 120 µm.
Preferably, (the area of the adhesion portion 4÷the area of the deaeration-adherable sheet 1) x 100 = 70 to 80(%).
The aeration groove 3 may be linear or curved as long as aeration is enabled to the edge of the deaeration-adherable sheet 1. Accordingly, the shape of the adhesion portion 4 is also not specifically limited.
However, it is preferable to provide the aeration groove 3 such that the adhesion portion 4 has a regular polygon shape in view of aeration, processing, and sticking properties. In the present embodiment, the aeration groove 3 is provided in a grid-like shape such that the adhesion portion 4 has a square shape as shown in FIGS. 1 and 2.

### (Difference with a sheet where an adhesive is applied to a stick surface)

In a conventional sheet if an adhesive is applied to a sticking surface, there frequently occurs a problem that when dust or hair sticks to the sticking surface (the surface where the adhesive is applied), it is very difficult to remove the dust or hair, or if adhesive surfaces come in contact with each other, it is very difficult to peel those surfaces apart. For example, a force required for peeling off the sheet where the adhesive is applied (a peel force) is 900 to 1000 g/3 cm wide.
The peel force of 900 to 1000 g/3 cm wide indicates a value of 2.9 to 3.3 N/cm at a peel rate of 200 mm/min and a peel angle of 180°.
Moreover, in this embodiment, an adhesive or a pressure-sensitive adhesive is not used. Thus, even when dust or hair sticks to the stick surface (the deaeration-adhesion surface 2), the sticking object can be easily removed from the stick surface. For example, a force required for peeling off the deaeration-adherable sheet 1 according to the present invention (a peel force) is 3 to 6 g/3 cm wide.
The peel force of 3 to 6 g/3 cm wide indicates a value of 0.01 to 0.02 N/cm at a peel rate of 200 mm/min and a peel angle of 180°.
In the present invention, since the adhesive is not required , the production cost is also decreased.

### (Second Embodiment)

In a deaeration-adherable sheet 1 according to a second embodiment, a surface sheet 12 is provided on the flexible member surface 11 of the deaeration-adherable sheet according to the first embodiment.

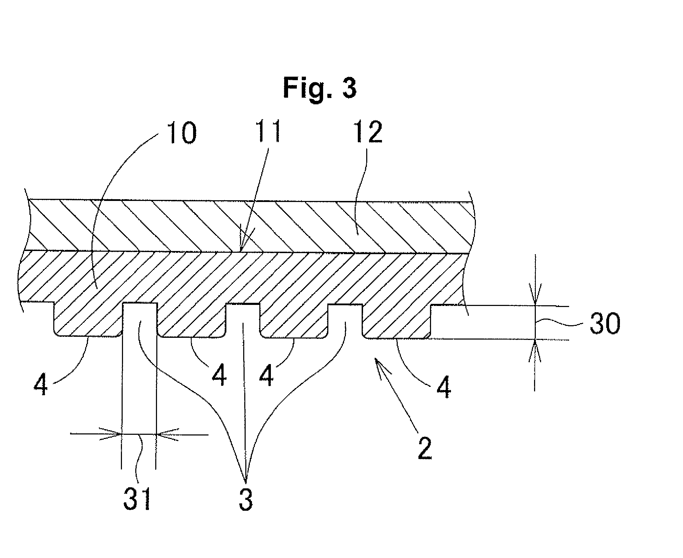

FIG. 1 is an entire view and a partially enlarged view of the deaeration-adherable sheet. A section along A in FIG. 1 is shown in FIG. 3. That is, FIG. 3 is a partially enlarged sectional view of the deaeration-adherable sheet according to the second embodiment.
The surface sheet 12 may be made of hard resin. Examples of the hard resin include poly(ethylene terephthalate) (PET) resin.
The flexible member 10 has the same configuration as that in the first embodiment.

### [Example 1]

To manufacture the deaeration-adherable sheet 1 according to the aforementioned embodiments, the following method was employed.

### (Material used)

Material for the deaeration-adherable sheet 1 containing 66.6% of poly(vinyl chloride), 32.0% of plasticizer, and 1.4% of stabilizer was prepared. Bis(2-ethylhexyl)phthalate was used as the plasticizer. A calcium-containing complex stabilizer was used as the stabilizer.
A sheet of poly(vinyl chloride) having a thickness of 250 µm was made from the above material.

### (Manufacturing process of the deaeration-adherable sheet 1 according to the first embodiment)

The deaeration-adherable sheet 1 according to the first embodiment was manufactured by a following process.
The sheet of poly(vinyl chloride) was held between a first guide roll and a preheating drum, and stuck on at least half the circumference of the preheating drum. While being rotated by the preheating drum, the sheet was heated by a heater to a temperature at which embossing can be performed. The heating temperature at this time was 150°C.
The aeration groove 3 and the adhesion portion 4 were formed in the heated sheet of poly(vinyl chloride) by an emboss roll. The sheet was then sent out by a second guide roll and a plurality of guide rolls. The deaeration-adherable sheet 1 according to the first embodiment was thereby obtained.
The deaeration-adherable sheet 1 according to the first embodiment corresponds to the flexible member 10 of the deaeration-adherable sheet 1 according to the second embodiment.
Subsequently, the deaeration-adherable sheet 1 according to the second embodiment will be described.

### (Manufacturing process of the deaeration-adherable sheet 1 according to the second embodiment)

The sheet of the flexible member 10 was sent out by a third guide roll, and the surface sheet 12 was sent out by a fourth guide roll. The sheets were held between a fifth guide roll and a combining drum.
When being held, the sheet of the flexible member 10 and the surface sheet 12 overlapping with each other on the combining drum were combined together. The sheets may be combined by heating, or an adhesive may be applied to the flexible member surface 11 to combine the sheets.
The sheet obtained by combining the sheet of the flexible member 10 and the surface sheet 12 was the deaeration-adherable sheet 1 according to the second embodiment. The sheet was then sent out by a sixth guide roll and a plurality of guide rolls and wound to be provided as a product.

### (Result of embossing)

In Example 1, an embossing plate was pressed against the sheet of poly(vinyl chloride) having a thickness of 250 µm, and the sheet was subjected to heat treatment at 150°C, to thereby form the aeration groove 3.
Table 1 shows a measurement result on the groove depth 30 of the aeration groove 3 after performing embossing in various manners.

**[Table 1]**

| | Height of embossing plate (Design) | Groove depth 30 after heat treatment (150°C) |
|---|---|---|
| Experimental example 1 | 50µm | 45µm |
| Experimental example 2 | 100µm | 74µm |
| Experimental example 3 | 150µm | 80µm |
| Experimental example 4 | 200µm | 88µm |

Among experimental examples 1 to 4 in Table 1, the most preferable product was obtained when the height of the embossing plate was 100 µm and the groove depth 30 after the heat treatment was 74 µm.

### (Peel force in the present invention)

The adhesion portion 4 was formed in a square shape by the embossing. One side of the adhesion portion 4 was 0.62 mm, and the groove width 31 of the aeration groove was 0.1 mm.
Accordingly, the ratio of the adhesion portion 4 was obtained based on a unit area as follows.
Entire area = (0.62+0.1) x (0.62+0.1) = 0.5184 mm²
Adhesion portion area = 0.62 x 0.62 = 0.3844 mm²
The ratio of the adhesion portion 4 to the entire area of the deaeration-adherable sheet was obtained as follows.
(0.3844 ÷ 0,5184) x 100 = 74.2%
The deaeration-adherable sheet 1 had a peel force within a range of 3 to 6 g/3 cm wide because of the adhesion portion 4 accounting for 74.2% of the entire area.

### (Another embodiment)

The sheet produced as described above was obtained as the deaeration-adherable sheet 1 because of the plurality of aeration grooves 3.
A separate film to be peeled off in use may be also provided on the deaeration-adhesion surface 2 of the deaeration-adherable sheet 1.
The separate film is provided by a heat drum roll of 120°C by using a poly(ethylene terephthalate) film.

## Claims

1. A deaeration-adherable sheet is a sheet (1) that can be deaerated to adhere to an object without using an adhesive,
wherein an aeration groove (3) is provided at least in a deaeration-adhesion surface (2) of the deaeration-adherable sheet.

2. A sheet according to claim 1, wherein the aeration groove (3) is provided by concave-convex processing.

3. A sheet according to claim 1 or claim 2, wherein the depth (30) of the aeration groove (3) is 30 µm to 100 µm.

4. A sheet according to any one of claims 1 to 3, wherein the width (31) of the aeration groove (3) is 50 µm to 120 µm.

5. A sheet according to any one of claims 1 to 4, wherein the aeration groove (3) has the shape of a regular polygon shape.

6. A sheet according to any one of claims 1 to 5, wherein the deaeration-adherable sheet (1) is made of poly(vinyl chloride).
